# EUROPEAN PATENT APPLICATION

(11) **EP 0 977 332 A1**
(43) Date of publication of application: **02.02.2000**
(21) Application number: 98305984.1
(22) Date of filing: 28.07.1998
(51) Int. Cl.: H02B 1/36

(54) **Cabinet**

(71) Applicant: Reddicliffe, Edward A., Lymington, Hants SO41 8PS (GB)
(72) Inventor: Reddicliffe, Edward A., Lymington, Hants SO41 8PS (GB)
(74) Representative: Jackson, Peter Arthur

(57) **Abstract**

A cabinet comprises an equipment bearing rack (2) which is, in normal use, located adjacent to a support (1) and is movable laterally away from the support (1) to allow access to equipment on the rack (2); and a supporting mechanism comprising a pivotable linkage pivotally attached to the support (1) and at elevational spaced locations to the rack (2), so as to prevent the rack (2) from tipping when it is moved laterally relatively to the support (1).

## Description

The present invention relates to a cabinet, and, in particular, to a cabinet for housing electronic equipment.

In the fields of telecommunications and data networking, racks for the equipment tend to be tall relatively to the floor plan which they occupy. Such racks have to be permanently fixed to a strong stable surrounding frame, or to a solid wall, and are bolted to the floor in order to provide stability. The equipment mounted in these racks is designed so that it can be serviced and maintained from the front of the cabinet which is relatively accessible. Some equipment, however, is designed to be accessed from the rear for maintenance and servicing. This makes maintenance a complicated and time consuming activity in fixed racks which have no rear access, particularly if two or more equipment sub-racks are housed in a rack and interconnected with cable looms. In such a case, the removal of one sub-rack requires all of the sub-racks to be removed together. A further consideration is that each sub-rack can weigh more than 50kg, so that a typical cabinet with three sub-racks will require 150kg to be manhandled.

A typical rack for telecommunications equipment is 2200mm high, 600mm wide and 300mm deep. As the rack is only 300mm deep, there is very little room for any telescopic stabilisers to be used. One possibility would be to use multisection slides, but these would be extremely bulky and would not prevent the rack from tilting.

According to the present invention there is provided a cabinet comprising an equipment-bearing rack which is, in normal use, located adjacent to a support and is movable laterally away from the support to allow access to equipment on the rack; and a supporting mechanism comprising a pivotable linkage pivotally attached to the support and at elevational spaced locations to the rack, so as to prevent the rack from tipping when it is moved laterally relatively to the support.

The support mechanism allows the rack to be moved away from the cabinet in a perfectly stable and safe manner. Further, the linkage system is compact and can be designed to be retractable back into the cabinet.

To increase stability, the supporting mechanism may comprise two pivotable linkages, one connected at each side of the rack.

Preferably friction reducing elements such as castors or slides are provided on the base of the rack to facilitate the movement of the rack relatively to the support.

One type of linkage which can be used to support the rack against tipping comprises a respective strut pivotally attached at each of the elevationally spaced locations, the two struts being linked by a supporting strut pivotally attached at the end of each strut remote from the elevationally spaced locations in such a way that the two struts and the supporting strut form, together with the portion of the rack between the elevationally spaced locations a parallelogram linkage, a further linkage being provided for pivotally supporting the parallelogram linkage with respect to the support.

Preferably, this further linkage comprises two further struts of equal length each pivotally attachable at one end to a support, each respective further strut being pivotally attached at the other end to the supporting strut wherein the distance between the attachments on the support equals the distance between attachments on the supporting strut.

An example of a cabinet in accordance with the present invention will now be described with reference to the accompanying drawings, in which:
Fig. 1 is a schematic perspective view of a cabinet; and
Fig. 2 shows an alternative linkage.

The cabinet has a shroud 1 which is rigidly fixed in place to act as the support. In other embodiments, the support could simply be provided by a wall. A rack 2 carrying electrical equipment is shown in an extended position in the figure. During normal operation of the electrical equipment, the rack is retracted into the shroud. The rack 2 has castors for allowing it to be moved into and out of the shroud in the direction of the arrow 5.

In order to prevent tipping of the rack 2 as it is moved a pivotable linkage is provided. This includes a parallelogram linkage formed by a portion of the rack 2 between two elevationally spaced pivot points 5, 6 providing a first long side, a vertical support strut 7 providing a parallel long side, a first short strut 8 pivotally attached at one end to pivot point 5 and pivotally attached at the other end to the vertical strut at the pivot point 9, and a second short strut 10 parallel to the first short strut 8 pivotally attached at one end to pivot point 6, and at the other end to vertical strut 7 at pivot point 11 to complete the parallelogram. The distance between the two pivot points 5, 6 is the same as the distance between the pivot points 9, 11 of the support strut 7, while the distance between the pivot point 5, 9 of the first short strut 8 is the same as the distance between pivot point 6, 11 of the second short strut 10. To increase rigidity, additional short struts having the same length as first and second short struts 8, 10 may be provided between and parallel to the first and second short struts, and pivotally connected to the rack 2 and support.

The parallelogram linkage is connected to a pair of further struts 12, 13 of equal length. The upper further strut 12 is pivotally attached at one end to the support at pivot point 14 and is pivotally attached at the other end to pivot point 9. Similarly the lower further support strut is pivotally attached at one end to the support at a pivot point 15, while the other end is pivotally attached at pivot point 11.

To increase rigidity additional struts can be provided between and parallel to the further struts 12, 13. Such additional struts would be pivotally attached to the support and to the supporting strut, and would be the same length as the further struts 12, 13.

The distance between pivot points 14, 15 is the same as the distances between the pivot points 5, 6 and between the pivot points 9, 11.

During/ normal operation when the rack 2 is within the shroud 1, the linkage will be in a folded configuration with the parallelogram linkage having moved in the direction of the arrow 16. In this position the vertical support strut 17 will be adjacent to the rear of the shroud and the side of the rack 2. The struts 8, 12, 10 and 13 will be housed within the shroud and will extend substantially vertically downwardly.

When the rack is pulled out in the direction of arrow 5, the linkage will be extended to the configuration shown in the figure and it will be appreciated that the vertical strut 7 of the parallelogram linkage will ensure that the rack 2 is incapable of being tilted.

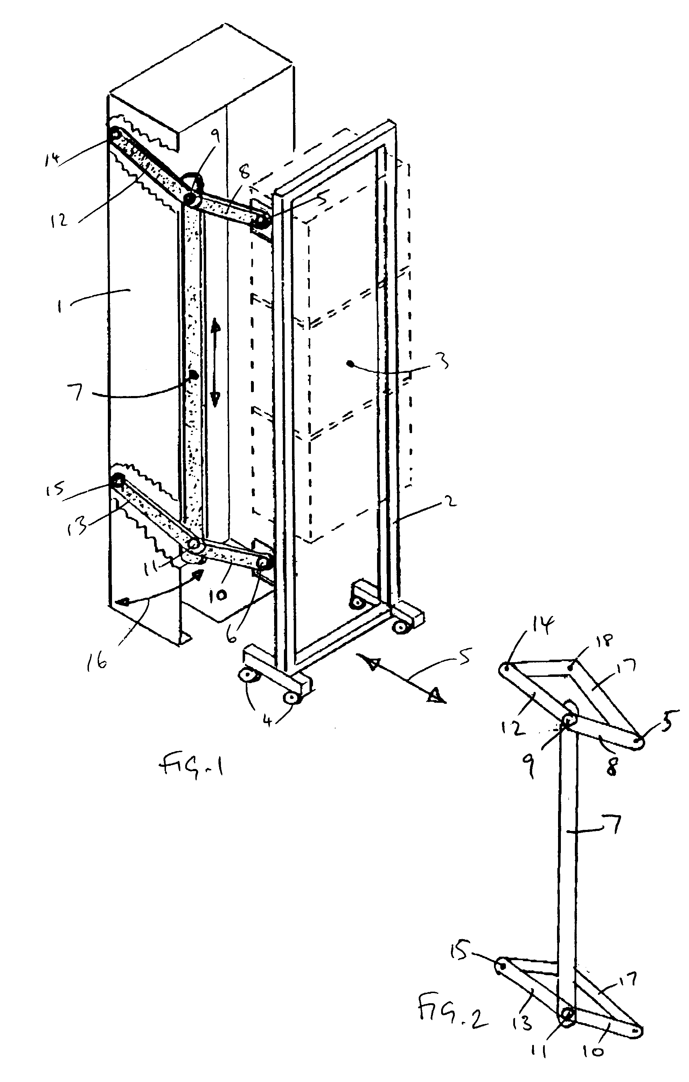

Fig. 2 shows an alternative linkage in which the same struts and pivot points are indicating with the same reference numerals as in Fig. 1. In Fig. 2 the only difference is the addition of pivoted arms 17 attached to the pivot points 5, 14, 6, 13 as illustrated. Each arm 17 is pivoted at a point 18 in order to provide parallelogram linkages with the pairs of struts 8, 12 and 10, 13. Although not illustrated the pivot points 18 of the two arms 17 could be joined by a further vertical linkage in order to increase further a stability of the structure.

## Claims

1. A cabinet comprising an equipment-bearing rack (2) which is, in normal use, located adjacent to a support (1) and is movable laterally away from the support (1) to allow access to equipment on the rack (2); and a supporting mechanism comprising a pivotable linkage pivotally attached to the support (1) and at elevational spaced locations to the rack (2), so as to prevent the rack (2) from tipping when it is moved laterally relatively to the support (1).

2. A cabinet according to claim 1, wherein the pivotable linkage comprises a respective strut (8,10) pivotally attached at each of the elevationally spaced locations (5,6), the two struts (8,10) being linked by a supporting strut (7) pivotally attached at the end of each strut (9,11) remote from the elevationally spaced locations (5,6) in such a way that the two struts (8,10) and the supporting strut (7) form, together with the portion of the rack (2) between the elevationally spaced locations (5,6) a parallelogram linkage, a further linkage being provided for pivotally supporting the parallelogram linkage with respect to the support (1).

3. A cabinet according to claim 2, wherein the further linkage comprises two further struts (12,13) of equal length each pivotally attachable at one end (14,15) to a support (1), each respective further strut (12,13) being pivotally attached at the other end to the supporting strut (7) wherein the distance between the attachments (14,15) on the support equals the distance between attachments (9,11) on the supporting strut.

4. A cabinet according to any one of the preceding claims, wherein the supporting mechanism comprises two pivotable linkages, one connected at each side of the rack (2).

5. A cabinet according to any one of the preceding claims, wherein friction reducing elements (4) such as castors or slides are provided on the base of the rack (2) to facilitate the movement of the rack (2) relatively to the support (1).
